# EUROPÄISCHE PATENTSCHRIFT

(11) **EP 1 576 563 B1**
(45) Veröffentlichungstag und Bekanntmachung des Hinweises auf die Patenterteilung: **27.12.2006**
(21) Anmeldenummer: 03812552.2
(22) Anmeldetag: 16.09.2003
(51) Int. Cl.: G08G 1/14

(54) **EINPARKHILFE**
PARKING AID
AIDE AU STATIONNEMENT

(30) Priorität: 11.12.2002 DE 10257722
(43) Veröffentlichungstag der Anmeldung: 21.09.2005
(73) Patentinhaber: ROBERT BOSCH GMBH, 70442 Stuttgart (DE)
(72) Erfinder: DANZ, Christian, 70469 Stuttgart (DE); NOLL, Martin, 76461 Muggensturm (DE); GAUGER, Christoph, 71083 Herrenberg (DE); SCHICK, Jens, 71083 Herrenberg (DE)
(86) Internationale Anmeldenummer: PCT/DE2003/003073
(87) Internationale Veröffentlichungsnummer: WO 2004/053812

(56) Entgegenhaltungen:
- DE-C- 19 806 150
- US-A- 6 097 314
- US-A1- 2002 161 520

## Beschreibung

### Stand der Technik

Die Erfindung geht aus von einer Einparkhilfe nach der Gattung des Hauptanspruchs. Bei einem Einparkvorgang ist es die Aufgabe des Fahrzeugführers, abzuschätzen, ob die Parklücke für ein Einparken mit seinem Fahrzeug groß genug ist und ob das Fahrzeug sicher in die Parklücke eingeparkt werden kann. Zur Erleichterung dieser Abschätzung sind Parklückenvermessungssysteme bekannt, die einer Vermessung der Parklückenabmaße insbesondere zwischen zwei parkenden Fahrzeugen dienen. Bei einer Vorbeifahrt erfassen Abstandssensoren zunächst ein erstes stehendes Hindernis, dann die Länge der Parklücke und nachfolgend ein zweites stehendes Hindernis. Anschließend wird dem Fahrer angezeigt, ob sein Fahrzeug in die Lücke zwischen den Hindernissen passt. Der Fahrer muss jedoch auf Basis dieser Anzeige noch selbst entscheiden, ob er die jeweilige Parklücke zum Einparken verwenden will. Hierbei ist zu berücksichtigen, dass in Abhängigkeit von den Fahrkünsten des Fahrers unterschiedlich große Parklücken auch für das gleiche Fahrzeug gewünscht werden. Ein Vergleich zwischen den Abmaßen verschiedener Parklücken ist nicht vorgesehen. Ferner muss eine Messvorrichtung bereits vor der Parklücke aktiviert sein. Ist ein Fahrer nun an einer eigentlich geeigneten Parklücke vorbeigefahren, ohne das System zu aktivieren, so muss er die Vorbeifahrt wiederholen, um die Messung vorzunehmen.

Aus der US 6,097,314 ist ein Verfahren zur Anzeige von Steuereingriffen zum Parken eines Fahrzeugs bekannt. Nach einem eingegebenen Bestätigungssignal wird mit einer Parkplatzsuche begonnen. Hierzu werden Parklücken vermessen, an denen das Fahrzeug vorbeifährt. Ist eine vermessene Parklücke zu klein zum Einparken, so wird eine Vermessung fortgeführt. Die gespeicherten Daten über die bisher vermessene Parklücke werden gelöscht. Ist die Parklücke groß genug, so wird dem Fahrer angezeigt, dass die vermessene Lücke groß genug zum Einparken ist.

Aus der DE 198 06 150 C1 ist ein Fahrzeug mit einer Objekterfassungseinrichtung bekannt, mittels der ein seitlich rückwärtiger Beobachtungsbereich an dem Fahrzeug erfasst wird. Bei einem Vorbeifahren an zwei beabstandeten, parkenden Fahrzeugen wird das Vorhandensein einer dazwischen liegenden Parklücke erfasst.

### Vorteile der Erfindung

Die erfindungsgemäße Einparkhilfe mit den Merkmalen des Hauptanspruchs hat dem gegenüber den Vorteil, dass die Eigenschaften der Parklücke gespeichert und gegebenenfalls verarbeitet dem Fahrzeugführer angezeigt werden. Hierdurch kann er sich ein objektives Bild von der Parklücke schaffen und deren Eigenschaften gegebenenfalls mit anderen Parklücken vergleichen, an denen er zuvor vorbeigefahren ist oder in die er bereits zuvor einmal eingeparkt hat. Er kann somit auf einer sicheren Basis seine Entscheidung treffen, ob er in eine jeweilige Parklücke einparken will. Besonders vorteilhaft ist es dabei, die Eigenschaften verschiedener Parklücken zugleich anzuzeigen, um einen Vergleich der verschiedenen Parklücken zu ermöglichen. Hierdurch kann der Benutzer die für ihn geeignete Parklücke aussuchen und zwischen z.B. einer größeren Parklücke und einem größeren Laufweg zu seinem eigentlichen Ziel abwägen.

Durch die in den Unteransprüchen aufgeführten Maßnahmen sind vorteilhafte Weiterbildungen und Verbesserungen der im Hauptanspruch angegebenen Einparkhilfe möglich. Besonders vorteilhaft ist, eine Länge, eine Breite, ein Verhältnis zu den Fahrzeugabmessungen und/oder eine Entfernung des Fahrzeugs zu der Parklücke anzuzeigen. Anhand dieser Informationen kann der Benutzer seine Entscheidung treffen und gegebenenfalls auch zu einer Parklücke zurückfahren, die er bereits passiert hat. Deren Auffinden wird insbesondere durch die Anzeige einer Entfernungsangabe erleichtert.

Besonders vorteilhaft ist ferner, dass die gespeicherten Eigenschaften wieder gelöscht werden, nachdem das Fahrzeug eine vorgegebene Entfernung zu der Parklücke zurückgelegt hat, so dass nur Informationen zu Parklücken vorgehalten werden müssen, bei denen tatsächlich auch mit einer Benutzung durch den Fahrzeugführer zu rechnen ist.

Ferner ist vorteilhaft, die Einparkhilfe bei Unterschreiten einer vorgegebenen Fahrzeuggeschwindigkeit automatisch zu aktivieren. Hierdurch kann auf eine manuelle Aktivierung durch den Benutzer verzichtet werden, so dass auch bei einem plötzlichen Anhaltewunsch des Benutzers Informationen über zurückliegende, bereits passierte Parklücken vorliegen. Die vorgegebene Fahrzeuggeschwindigkeit ist dabei vorzugsweise durch diejenige maximale Geschwindigkeit gegeben, bei der eine zuverlässige Messung der Parklückenabmaße mittels der an dem Fahrzeug angeordneten Messeinheiten noch möglich ist.

Ferner ist vorteilhaft, die Eigenschaften der Parklücken erst dann anzuzeigen, wenn dies durch einen Benutzereingriff gewünscht wird. Hierdurch wird eine Irritation des Benutzers durch eine ständige Anzeige von Hinweisen auf mögliche Parklücken vermieden. Besonders vorteilhaft erfolgt dabei eine automatische Aktivierung bei der Betätigung von allgemeinen Bedienelementen, wie z.B. dem Setzen eines Blinkers und/oder dem Einlegen des Rückwärtsgangs. Aus der Vornahme einer solchen Bedienung kann mit hoher Wahrscheinlichkeit auf einen gewünschten Einparkvorgang geschlossen werden. Weitere Benutzereingaben sind dann zur Aktivierung der Anzeige nicht erforderlich.

Weiterhin ist vorteilhaft, die Ausgabeeinheit der Einparkhilfe in einer Anzeigeeinheit in dem Kraftfahrzeug zu integrieren. Besonders vorteilhaft ist dabei die Anzeige in einem Kombinationsinstrument, das der Anzeige einer Vielzahl von Fahrzeuggrößen dient. Dieses ist zentral für einen Benutzer gut sichtbar angeordnet und wird somit von dem Fahrer besonders wahrgenommen.

### Zeichnung

Ausführungsbeispiele der Erfindung sind in der Zeichnung dargestellt und in der nachfolgenden Beschreibung näher erläutert. Figur 1 zeigt eine schematische Darstellung einer erfindungsgemäßen Einparkvorrichtung in einem Fahrzeug, das in Aufsicht vorbeifahrend an einer Parklücke dargestellt ist. Die Figuren 2 und 3 zeigen Ausführungsbeispiele für eine Darstellung von Eigenschaften einer Parklücke in einer Anzeigeeinheit.

### Beschreibung des Ausführungsbeispiels

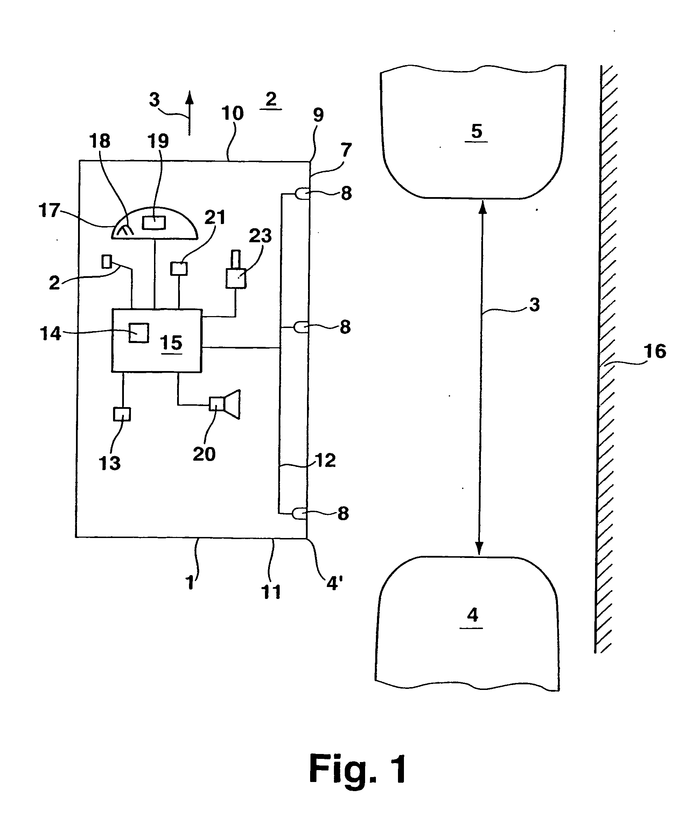

Die erfindungsgemäße Einparkhilfe kann für beliebige Fahrzeuge verwendet werden, findet jedoch insbesondere bei Kraftfahrzeugen Verwendung. In der Figur 1 ist ein Kraftfahrzeug 1 dargestellt, das sich auf einer Straße 2 in einer durch einen Pfeil dargestellten Fahrtrichtung 3 bewegt. Zwischen einem ersten Fahrzeug 4 und einem zweiten Fahrzeug 5 befindet sich eine Parklücke 6, deren Länge ebenfalls durch Pfeile skizziert ist. An einer rechten Fahrzeugseite 7 des Kraftfahrzeugs 1 sind drei Abstandssensoren 8 angeordnet, die als eine Messeinheit zur Abstandsmessung dienen. Die Abstandssensoren 8 sind bevorzugt als Ultraschallsensoren ausgeführt, die ein Ultraschallsignal aussenden, das reflektierte Ultraschallsignal empfangen und aus der Laufzeit des Ultraschallsignals einen Abstand des Kraftfahrzeugs 1 zu Hindernissen neben dem Kraftfahrzeug bestimmen. Anstelle von Ultraschallsensoren können auch Sensoren verwendet werden, die andere Wellensignale aussenden, insbesondere elektromagnetische Wellen, z.B. Radarwellen.

In dem angegebenen Ausführungsbeispiel sind drei Abstandssensoren 8 vorgesehen. Es können jedoch auch nur ein oder zwei Abstandssensoren oder auch mehr als drei Abstandssensoren verwendet werden. Neben den oder statt der in der Figur 1 gezeigten Abstandssensoren 8 können auch Abstandsensoren verwendet werden, die auf den Fahrzeugecken 9; 9' montiert sind und deren Strahlkegel ungefähr um 45° gegen die Fahrzeugvorderseite 10 bzw. eine Fahrzeugrückseite 11 und der rechten Fahrzeugseite 7 geneigt sind. Für ein Einparken an der linken Fahrzeugseite können dort ergänzend weitere Abstandssensoren angeordnet sein, die jedoch aus Gründen der Übersichtlichkeit der Zeichnung in der Figur 1 nicht dargestellt sind.

Über Datenleitungen 12 sind die Abstandssensoren 8 mit einer Auswerteeinheit 15 verbunden. Die Auswerteeinheit 15 erfasst bei der Vorbeifahrt des Kraftfahrzeugs 1 an der Parklücke 6 sowohl die von den Abstandssensoren 8 erfassten Messdaten und ordnet diese mittels Wegstreckensignalen einer jeweiligen Position des Kraftfahrzeugs 1 zu. Die Wegstreckensignale werden von einem Wegstreckensensor 13, z.B. ein Raddrehzahlsensor, an die Auswerteeinheit 15 übermittelt. Die gemessenen Abstandswerte werden in einer Speichereinheit 14 abgelegt. In einer weiteren Ausführungsform können stattdessen die Länge und/oder die Breite der Parklücke 6 in der Speichereinheit 14 abgelegt werden. In einem weiteren Ausführungsbeispiel kann auch das Verhältnis der Länge der Parklücke 6 und die Länge des Kraftfahrzeugs 1 in geeigneter Weise in der Speichereinheit 14 abgelegt werden. Dies kann z.B. die Längendifferenz des Kraftfahrzeugs 1 gegenüber der Länge der Parklücke 6 sein, kann aber auch nur eine Information darüber sein, ob die Parklücke für ein Einparken gut, schlecht oder überhaupt nicht geeignet ist. Neben dem Abstand des Kraftfahrzeugs 1 zu dem ersten Fahrzeug 4 und dem zweiten Fahrzeug 5 wird dabei von den Abstandssensoren 8 auch der Abstand zu einer seitlichen Begrenzung der Parklücke 6 gemessen, hier zu einer Hauswand 16.

Die Auswerteeinheit 15 ist ferner mit einer Anzeigeeinheit 17 vor dem Fahrer verbunden, die einer Vielzahl von Anzeigen dient. Gegebenenfalls können Skalenanzeigen 18 z.B. zur Anzeige des Tankfüllstandes, der Kühlwassertemperatur und/oder der Fahrzeuggeschwindigkeit vorgesehen sein. In einer bevorzugten Ausführung ist ein Anzeigenbildschirm, z.B. eine Flüssigkristallanzeige, vorgesehen, in der eine Vielzahl von Informationen beliebig darstellbar sind. In der bevorzugten Ausführungsform werden die Informationen der Einparkhilfe in dem Bildschirm 19 angezeigt, so dass die Anzeigeeinheit 17 als Ausgabeeinheit dient. Anstelle des hier gezeigten Kombinationsinstruments können die Informationen der Einparkhilfe auch in einer weiteren Anzeige in der Mittekonsole des Kraftfahrzeugs ausgegeben werden. Ergänzend zu und/oder statt rein optischen Informationen ist ein Lautsprecher 20 vorgesehen, mittels dem akustische Informationen bezüglich der Parklücke 6 ausgegeben werden. Die akustische Ausgabe kann sich auf Warnsignaltöne beschränken, kann jedoch auch Informationen über die Parklücke in gesprochener Form ausgeben, z.B. "Die gerade passierte Parklücke ist für ein sicheres Einparken groß genug".

In einer bevorzugten Ausführungsform werden die Abstandssensoren 8 bei einem Unterschreiten einer vorgegebenen Geschwindigkeit automatisch aktiviert. Diese vorgegebene Geschwindigkeit wird vorzugsweise durch die maximale Messauflösung der Abstandsensoren 8 bestimmt, da bei einer höheren Geschwindigkeit eine sichere, noch hinreichend genaue Erfassung der passierten Parklücke 6 möglicherweise nicht mehr gegeben ist. Diese Geschwindigkeit ist damit von den verwendeten Sensoren, von deren Anzahl und/oder von deren Ansteuerung abhängig. Diese Geschwindigkeit beträgt in einer Ausführungsform zwischen 20 km und 45 km pro Stunde. Eine entsprechende Geschwindigkeitsinformation wird entweder von dem Wegstreckensensor 13 oder der Anzeigeeinheit 17, z.B. über einen Datenbus, an die Auswerteeinheit 15 übertragen, die in Abhängigkeit von diesem Signal die Abstandssensoren 8 für die Messung ansteuert. Wird die vorgegebene Geschwindigkeit unterschritten, so vermessen die Abstandssensoren 8 den Straßenrand, an dem das Kraftfahrzeug 1 vorbeifährt, bis entweder ein Einparkvorgang eingeleitet wird oder bis die Grenzgeschwindigkeit wieder überschritten wird. Die entsprechenden Abstandswerte und/oder Parklückeninformationen werden in der Speichereinheit 14 zugeordnet zu dem von dem Kraftfahrzeug 1 mittels des Wegstreckensensors 13 ermittelten, zurückgelegten Weges abgelegt. Ist die Speichereinheit 14 gefüllt bzw. wird ein vorgegebener Abstand, von z.B. 1 km zu einer passierten Parklücke überschritten oder wird eine vorgegebene Anzahl von Parklückeninformationen, z.B. eine Speicherung von Daten zu fünf Parklücken, überschritten, so werden die zuerst eingegebenen Daten gelöscht, so dass neue Daten in die Speichereinheit 14 aufgenommen werden können. Anstelle einer geschwindigkeitsabhängigen Aktivierung der Abstandssensoren 8 kann auch ein Bedienelement 21 vorgesehen sein, über die die erfindungsgemäße Einparkhilfe aktiviert werden kann.
Hält nun ein Fahrer an, so können ihm die Informationen über bereits passierte Parklücken angezeigt werden. Als ein Kriterium für die Anzeige können verschiedene Bedingungen dienen. In einer ersten Ausführungsform ist hierfür eine Betätigung des Bedienelementes 21 erforderlich. In einer weiteren Ausführungsform kann die Anzeige von Informationen zu Parklücken von einer stark verringerten Geschwindigkeit, z.B. um weniger als fünf Kilometer pro Stunde, abhängig gemacht werden. Diese Bedingung kann z.B. auch mit dem Einlegen des Rückwärtsgangs und/oder mit der Betätigung des Blinkers verknüpft werden. Eine Anzeige kann auch dann erfolgen, wenn Rückwärtsgang und/oder Blinker jeweils alleine für sich betätigt werden. Der Vorteil eine Parklückenvermessung abhängig von einer Geschwindigkeitsverringerung, einem Einlegen des Rückwärtsgangs und/oder einer Blinkerbetätigung zu starten, ist es, dass keine Betätigung eines zusätzlich angeordneten Bedienelements erforderlich ist. Zur Erfassung der Blinkerbetätigung ist die Auswerteeinheit 15 mit einem Blinkerhebel 22 verbunden. Zur Erfassung einer Schaltungsbetätigung ist die Auswerteeinheit 15 mit einem Schalthebel 23 verbunden.

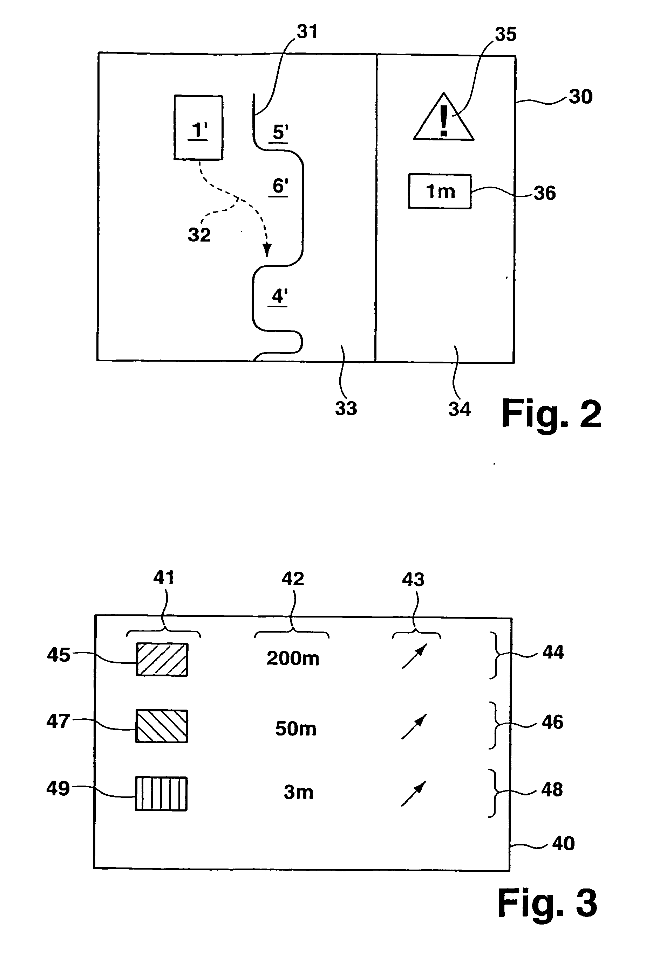

In der Figur 2 ist ein erstes Ausführungsbeispiel für eine Darstellung in dem Bildschirm 19 gegeben. Nachdem der Fahrer z.B. angehalten und den Blinker gesetzt hat, wird die ansonsten in der Anzeigeeinheit vorgenommene Anzeige der aktuellen Fahrzeuggeschwindigkeit durch die in der Figur 2 dargestellte Anzeige der erfindungsgemäßen Einparkhilfe ersetzt. In einer Anzeigefläche 30 des Bildschirms 19 ist in einem ersten Bereich ein Verlauf 31 der Geometrie der Hindernisse an dem Straßenrand dargestellt. Erkennbar ist die Kontur des ersten Fahrzeugs 4' und die Kontur des zweiten Fahrzeugs 5'. Ebenfalls ist die Parklücke 6' erkennbar. Eine Darstellung 1' des Kraftfahrzeugs 1 ist zusammen mit einer Trajektorie 32 dargestellt, die den Fahrweg des Kraftfahrzeugs 1 in die Parklücke 6' darstellt. Der Verlauf 31 des Straßenrands wird vorzugsweise für eine Strecke von 5 bis 20 m, vorzugsweise von 15 m, in dem ersten Bereich 33 dargestellt. In einem zweiten Bereich 34 ist bei der hier dargestellten Ausführungsform zusätzlich ein Warnsymbol 35 und ein Abstandswert 36, hier 1 m, dargestellt. Der Wert 1 m bezeichnet hierbei den Unterschied, der zwischen der Länge der Parklücke 6' und der Länge des Kraftfahrzeugs 1 besteht. Das Warnsymbol 35 soll dabei darauf hinweisen, dass der Längenunterschied zwischen dem Kraftfahrzeug 1' und der Parklücke 6' nur gering ist und der Einparkvorgang damit besondere Vorsicht erfordert. Zusätzlich kann hierbei eine akustische Sprachausgabe und/oder ein akustisches Warnsignal ausgegeben werden.

In der Figur 3 ist ein weiteres Ausführungsbeispiel für eine Anzeige in dem Bildschirm 19 dargestellt. In der Anzeigenfläche 40 ist in einer ersten Spalte 41 ein Farbsignal für jede Parklücke dargestellt. In einer zweiten Spalte 42 ist dem Farbsignal zugeordnet ein Abstandswert angezeigt. In einer dritten Spalte 43 ist z.B. eine der jeweiligen Parklücke zugeordnete Pfeildarstellung angezeigt, mittels der dem Benutzer angezeigt wird, ob es sich um eine Parklücke am rechten oder linken Straßenrand handelt. Um die Übersichtlichkeit für einen Benutzer zu wahren, werden vorzugsweise nur bis zu fünf Parklücken in der Anzeigefläche 40 angezeigt. Bevorzugt werden nur solche Parklücken dargestellt, die zum Einparken mittels dem Kraftfahrzeug 1 überhaupt geeignet sind. Ungeeignete Parklücken werden dagegen bevorzugt in der Anzeige unterdrückt und ihre Daten werden auch aus der Speichereinheit 14 gelöscht. In dem hier dargestellten Ausführungsbeispiel wird über einen Farbcode in der ersten Spalte 41 dem Benutzer angezeigt, wieviel Platz ihm die Parklücke bietet. Statt des Farbcodes kann auch die Länge der Parklücke, die Breite der Parklücke und/oder ein Verhältnis der Parklücke zu den Außenmaßen des Kraftfahrzeugs angezeigt werden. Bei dem hier gewählten Ausführungsbeispiel befindet sich auf der rechten Straßenseite gemäß einer ersten Anzeigenzeile 44 im Abstand von 200 m eine Parklücke, der ein rotes Anzeigenfeld 45, gekennzeichnet durch die Schraffierung von links unten nach rechts oben, zugeordnet ist. Dies bedeutet, dass sich 200 m zurück eine Parklücke findet, die nur ein sehr knappes Einparken ermöglicht. In der zweiten Anzeigenzeile 46 befindet sich im Abstand von 50 m eine durch ein grünes Anzeigenfeld 47 gekennzeichnete Parklücke ebenfalls auf der rechten Straßenseite, wobei das grüne Anzeigenfeld 47, gekennzeichnet durch die Schraffierung von links oben nach rechts unten, ein sehr bequemes Einparken ermöglicht. Bevorzugt wird durch eine Anzeige eines grünen Anzeigenfelds darauf hingewiesen, dass an der Parklücke kein Rückwärtsfahren für das Einparken erforderlich ist, sondern dass das Fahrzeug auch bequem durch Vorwärtsfahren in die Parklücke gefahren werden kann. In der dritten Anzeigenzeile 48 wird auf eine drei Meter zurückliegende Parklücke, ebenfalls auf der rechten Straßenseite, hingewiesen, der ein gelbes Anzeigenfeld 49 zugeordnet ist, dass durch die Schraffierung von oben nach unten gekennzeichnet ist. Das gelbe Feld soll bedeuten, dass ein Einparken zwar bequem möglich ist, jedoch dennoch Vorsicht geboten ist. Insbesondere soll, entsprechend der Parklückenlänge, ein rückwärtiges Einparken vorgenommen werden. Ein Benutzer kann nun entscheiden, ob er die weiter entfernte Parklücke akzeptiert und den entsprechenden Einparkvorgang vornehmen will oder ob er die Fahrstrecke von 50 m zurückfährt, um die bequemere Parklücke zu wählen, wobei er gegebenenfalls einen Fußweg in Kauf nehmen muss. Fährt der Fahrer weiter und werden noch mindestens drei weitere Parklücken erfasst werden, so wird die Parklücke in der ersten Anzeigenzeile 44 aus der Anzeigenfläche 40 gelöscht.

## Patentansprüche

1. Einparkhilfe für ein Fahrzeug mit einer Messeinheit (8) zur Erfassung von Parklücken (6) bei einer Vorbeifahrt des Fahrzeugs (1) an den Parklücken (6), **gekennzeichnet durch** Speichereinheit (14) zur Speicherung von Eigenschaften von mehreren Parklücken (6) und eine Ausgabeeinheit (17, 19, 20, 30, 40) zur Ausgabe von Informationen zu den Parklücken (6), wobei die Eigenschaften der mehreren Parklücken zugleich in der Ausgabeeinheit (19, 30, 50) dargestellt sind.

2. Einparkhilfe nach Anspruch 1, **dadurch gekennzeichnet, dass** in der Ausgabeeinheit (17, 19, 30, 40) eine Länge, eine Breite, ein Verhältnis zu den Abmessungen des Fahrzeugs (1) und/oder eine Entfernung des Fahrzeugs zu mindestens einer Parklücke (6) angezeigt sind.

3. Einparkhilfe nach einem der vorherigen Ansprüche, **gekennzeichnet durch** eine Auswerteeinheit (15) zur Verwaltung der Speichereinheit (14), wobei **durch** die Auswerteeinheit (15) gespeicherte Eigenschaften einer Parklücke (6) nach einer vorgebbaren Entfernung des Fahrzeugs zu der Parklücke in der Speichereinheit (14) gelöscht werden.

4. Einparkhilfe nach einem der vorherigen Ansprüche, **dadurch gekennzeichnet, dass** die Einparkhilfe bei Unterschreiten einer vorgegebenen Fahrzeuggeschwindigkeit aktiviert ist und bei Überschreiten der vorgegebenen Geschwindigkeit deaktiviert ist.

5. Einparkhilfe nach einem der vorherigen Ansprüche, **dadurch gekennzeichnet, dass** eine Anzeige der Eigenschaften der Parklücke durch die Betätigung eines oder mehrerer Bedienelemente (21, 22, 23) im Fahrzeug (1) auslösbar ist.

## Claims

1. Parking aid for a vehicle having a measuring unit (8) for sensing parking spaces (6) when the vehicle (1) drives past the parking spaces (6), **characterized by** a memory unit (14) for storing properties of a plurality of parking spaces (6) and an output unit (17, 19, 20, 30, 40) for outputting information about the parking spaces (6), the properties of the plurality of parking spaces being displayed simultaneously in the output unit (19, 30, 50).

2. Parking aid according to Claim 1, **characterized in that** a length, a width, a ratio with respect to the dimensions of the vehicle (1) and/or a distance of the vehicle from at least one parking space (6) are displayed in the output unit (17, 19, 30, 40).

3. Parking aid according to one of the preceding claims, **characterized by** an evaluation unit (15) for managing the memory unit (14), properties of a parking space (6) which are stored by the evaluation unit (15) being deleted from the memory unit (14) after a predefinable distance of the vehicle from the parking space.

4. Parking aid according to one of the preceding claims, **characterized in that** when the speed of the vehicle drops below a predefined value the parking aid is activated, and it is deactivated when the predefined speed is exceeded.

5. Parking aid according to one of the preceding claims, **characterized in that** a display of the properties of the parking space can be triggered by activating one or more operator control elements (21, 22, 23) in the vehicle (1).

## Revendications

1. Aide au stationnement pour un véhicule comportant une unité de mesure (8) pour saisir des emplacements de stationnement (6) dans le cas d'un véhicule (1) qui passe devant des emplacements de stationnement (6),
**caractérisée par**
une unité de mémoire (14) pour mettre en mémoire les caractéristiques de plusieurs emplacements de stationnement (6) et une unité d'émission (17, 19, 20, 30, 40) pour émettre des informations relatives aux emplacements de stationnement (6), les propriétés des différents emplacements de stationnement étant en même temps présentées par une unité d'émission (19, 30, 50).

2. Aide au stationnement selon la revendication 1,
**caractérisée en ce que**
l'unité d'émission (17, 19, 30, 40) affiche la longueur, la largeur et le rapport aux dimensions du véhicule (1) et/ou l'éloignement du véhicule par rapport à au moins un emplacement de stationnement (6).

3. Aide au stationnement selon l'une des revendications précédentes,
**caractérisée par**
une unité d'exploitation (15) pour gérer l'unité de mémoire (14),
l'unité d'exploitation (15) effaçant les caractéristiques mémorisées d'un emplacement de stationnement (6) après que le véhicule se soit écarté d'une distance prédéterminée par rapport à l'emplacement de stationnement dans l'unité de mémoire (14).

4. Aide au stationnement selon l'une des revendications précédentes,
**caractérisée en ce que**
l'aide au stationnement est activée lorsqu'on passe en dessous d'une vitesse de dépassement prédéfinie et cette aide est neutralisée lorsqu'on dépasse une vitesse prédéfinie.

5. Aide au stationnement selon l'une des revendications précédentes,
**caractérisée en ce qu'**
un affichage des propriétés de l'emplacement de stationnement peut être effacé par l'actionnement d'un ou plusieurs éléments de manoeuvre (21, 22, 23) dans le véhicule (1).
